# EUROPEAN PATENT SPECIFICATION

(11) **EP 4 728 411 B1**
(45) Date of publication and mention of the grant of the patent: **14.10.2026**
(21) Application number: 24748447.0
(22) Date of filing: 15.07.2024
(51) Int. Cl.: G06F 21/55, H04L 9/40

(54) **SECURITY THREAT DETECTION**
SICHERHEITSBEDROHUNGSDETEKTION
DÉTECTION DE MENACE DE SÉCURITÉ

(30) Priority: 21.07.2023 ZA 202307279
(43) Date of publication of application: 22.04.2026
(73) Proprietor: Entersekt International Limited, Ebene (MU)
(72) Inventor: OOSTHUIZEN, Gerhard Gysbert, 7530 Cape Town (ZA)
(74) Representative: Mewburn Ellis LLP
(86) International application number: PCT/IB2024/056846
(87) International publication number: WO 2025/022232

(56) References cited:
- WO-A1-2022/087510
- US-A1- 2017 310 693

## Description

### FIELD OF THE INVENTION

This disclosure relates to a system and method for detecting and mitigating a security threat relating to an action initiated against a source account and affecting a destination account.

### BACKGROUND

Digital accounts are widely used for applications ranging from messaging, email, social media, banking, enterprise software and the like. In some cases, for example in the case of messaging, email, social media and banking, actions representing some kind of digital transfer can be initiated from a source account in favour of or affecting a destination account. The transfers effected through such actions can be of a sensitive nature, such that security is an important consideration.

There are cases where miscreants gain access to digital accounts to which they have no legitimate right of access, or where they use deceptive or fraudulent means to create digital accounts having a veneer of legitimacy, only to use such accounts, which may be termed "mule accounts" for fraudulent means. For example, a miscreant in control of a mule account may use deception or other fraudulent means (such as phishing, vishing, or the like) to coerce unsuspecting victims to initiate sensitive transfers from digital accounts controlled by those victims in favour of the miscreant's mule account.

A security problem therefore arises when purportedly legitimate digital accounts are used by miscreants to receive and distribute illegitimately obtained transfers of a sensitive nature from unsuspecting victims. US 2017/310693 A1 describes local proxy detection. Document WO 2022/087510 A1 describes behavior detection and verification.

Present techniques which aim to address such security threats are inadequate and there is accordingly scope for improvement. The preceding discussion of the background is intended only to facilitate an understanding of the present disclosure. It should be appreciated that the discussion is not an acknowledgment or admission that any of the material referred to was part of the common general knowledge in the art as at the priority date of the application.

### SUMMARY

In accordance with an aspect of the disclosure there is provided a computer-implemented method for detecting and mitigating a security threat relating to an action to be initiated against a source account affecting a destination account, comprising: receiving an action initiation request notification relating to a request to initiate the action from the source account and including information identifying the destination account; before permitting initiation of the action, using the destination account identifying information to retrieve activity attributes including digital activity attributes relating to past activity on the destination account initiated via a digital channel, the digital activity attributes including data points relating to access to the destination account and/or activity initiated on the destination account via the digital channel; determining a security threat score by inputting the retrieved activity attributes into a security threat scoring process which outputs a security threat score based on the activity attributes; and, processing the action based on the security threat score, including, when initiation of the action is permitted and when the action is flagged, monitoring the destination account and processing a subsequent action initiated from the destination account when a risk score associated with destination account activity meets a predefined risk score threshold, wherein monitoring the destination account includes evaluating characteristics of destination account activity and/or the subsequent action, wherein processing the subsequent action includes either permitting or declining to permit initiation of the subsequent action based on the evaluation, and wherein declining to permit initiation of the subsequent action includes reversing the action initiated from the source account affecting the destination account.

Processing the action may include one or more of: permitting initiation of the action when the security threat score meets a first predetermined threshold; flagging the action when the security threat score meets a second predetermined threshold; suspending initiation of the action pending further intervention when the security threat score meets a third predetermined threshold; reaching out and informing the initiator of the action of the threat actions and asking them to choose whether to continue or not; and, declining to permit initiation of the action when the security threat score meets a fourth predetermined threshold. Processing the action may include permitting initiation of the action and flagging the action when the security threat score meets the second predetermined threshold. Flagging the action may include transmitting a flag notification to a digital platform maintaining the destination account, the flag notification including the destination account identifying information and being configured to cause the digital platform to monitor the destination account.

Retrieving attributes may include identifying a digital channel endpoint linked to the destination account and retrieving attributes associated with the endpoint. The digital channel endpoint may include a software application executing on an end-user device. The software application may be one of: a web browser; or, a native application configured for interacting with the destination account via the digital channel.

The action initiation request notification may relate to a request to initiate an action from a source application linked to the source account.

The digital activity attributes may include data points relating to one or more of: configuration via the digital channel; interaction via the digital channel (including initiating actions); and metadata relating to activity initiated via the digital channel.

The activity attributes may include connected activity attributes relating to past activity between the destination account and one or more connected accounts. The one or more connected accounts include third party accounts being sources to or destinations from the destination account. The connected activity attributes may include patterns in activity between the destination account and the one or more connected accounts, such as frequency of actions, characteristics of actions and digital activity attributes relating to the actions.

In accordance with a further aspect of the disclosure there is provided a system for detecting and mitigating a security threat relating to an action to be initiated against a source account affecting a destination account, the system comprising: a non-transitory computer-readable storage medium; and one or more processors coupled to the non-transitory computer-readable storage medium, wherein the non-transitory computer-readable storage medium comprises program instructions that, when executed on the one or more processors, cause the system to perform operations comprising: receiving an action initiation request notification relating to a request to initiate the action from the source account and including information identifying the destination account; before permitting initiation of the action, using the destination account identifying information to retrieve activity attributes including digital activity attributes relating to past activity on the destination account initiated via a digital channel, the digital activity attributes including data points relating to access to the destination account and/or activity initiated on the destination account via the digital channel; determining a security threat score by inputting the retrieved activity attributes into a security threat scoring process which outputs a security threat score based on the activity attributes; and, processing the action based on the security threat score, including, when initiation of the action is permitted and when the action is flagged, monitoring the destination account and processing a subsequent action initiated from the destination account when a risk score associated with destination account activity meets a predefined risk score threshold, wherein monitoring the destination account includes evaluating characteristics of destination account activity and/or the subsequent action, wherein processing the subsequent action includes either permitting or declining to permit initiation of the subsequent action based on the evaluation, and wherein declining to permit initiation of the subsequent action includes reversing the action initiated from the source account affecting the destination account.

In accordance with a further aspect of the disclosure there is provided a system for detecting and mitigating a security threat relating to an action to be initiated against a source account affecting a destination account, the system including a memory for storing computer-readable program code and a processor for executing the computer-readable program code, and comprising: a notification receiving component for receiving an action initiation request notification relating to a request to initiate the action from the source account and including information identifying the destination account; a retrieving component for, before permitting initiation of the action, using the destination account identifying information to retrieve activity attributes including digital activity attributes relating to past activity on the destination account initiated via a digital channel, the digital activity attributes including data points relating to access to the destination account and/or activity initiated on the destination account via the digital channel; a security threat score determining component for determining a security threat score by inputting the retrieved activity attributes into a security threat scoring process which outputs a security threat score based on the activity attributes; and, an action processing component for processing the action based on the security threat score, including, when initiation of the action is permitted and when the action is flagged, monitoring the destination account and processing a subsequent action initiated from the destination account when a risk score associated with destination account activity meets a predefined risk score threshold, wherein monitoring the destination account includes evaluating characteristics of destination account activity and/or the subsequent action, wherein processing the subsequent action includes either permitting or declining to permit initiation of the subsequent action based on the evaluation, and wherein declining to permit initiation of the subsequent action includes reversing the action initiated from the source account affecting the destination account.

The action processing component may permit initiation of the action when the security threat score meets a first predetermined threshold. The action processing component may flag the action when the security threat score meets a second predetermined threshold. The action processing component may suspend initiation of the action pending further intervention when the security threat score meets a third predetermined threshold. The action processing component may reach out and inform the initiator of the action of the threat actions and ask them to choose whether to continue or not. The action processing component may decline to permit initiation of the action when the security threat score meets a fourth predetermined threshold.

The retrieving component may be configured to retrieve data points associated with the destination account from a digital activity data structure. The retrieving component may include an endpoint identifying component configured to identify a digital channel endpoint linked to the destination account. The retrieving component may retrieve attributes associated with the endpoint.

The digital channel endpoint may include a software application executing on an end-user device. The software application may be one of: a web browser; or, a native application configured for interacting with the destination account.

The system may include a digital activity reporting component executing on a computing device maintained by an entity maintaining the destination account. The digital activity reporting component may be configured to maintain a digital activity data structure which stores the digital activity attributes relating to activity on the destination account initiated via the digital channel.

The action initiation request notification may relate to a request to initiate an action from a source application linked to the source account.

The digital activity attributes may include data points relating to one or more of: configuration via the digital channel; interaction via the digital channel (including initiating actions); and metadata relating to activity initiated via the digital channel.

In accordance with a further aspect of the disclosure there is provided a computer program product for detecting and mitigating a security threat relating to an action to be initiated against a source account affecting a destination account, the computer program product comprising a computer-readable medium having stored computer-readable program code for performing the steps of: receiving an action initiation request notification relating to a request to initiate the action from the source account and including information identifying the destination account; before permitting initiation of the action, using the destination account identifying information to retrieve activity attributes including digital activity attributes relating to past activity on the destination account initiated via a digital channel, the digital activity attributes including data points relating to access to the destination account and/or activity initiated on the destination account via the digital channel; determining a security threat score by inputting the retrieved activity attributes into a security threat scoring process which outputs a security threat score based on the activity attributes; and, processing the action based on the security threat score, including, when initiation of the action is permitted and when the action is flagged, monitoring the destination account and processing a subsequent action initiated from the destination account when a risk score associated with destination account activity meets a predefined risk score threshold, wherein monitoring the destination account includes evaluating characteristics of destination account activity and/or the subsequent action, wherein processing the subsequent action includes either permitting or declining to permit initiation of the subsequent action based on the evaluation, and wherein declining to permit initiation of the subsequent action includes reversing the action initiated from the source account affecting the destination account.

The computer-readable medium may be a non-transitory computer-readable medium. The computer-readable program code may be executable by a processing circuit.

Embodiments of the technology will now be described, by way of example only, with reference to the accompanying drawings.

### BRIEF DESCRIPTION OF THE DRAWINGS

In the drawings:
- Figure 1: is a schematic diagram which illustrates an exemplary system for detecting and mitigating a security threat according to aspects of the present disclosure;
- Figure 2: is a flow diagram which illustrates an exemplary method for detecting and mitigating a security threat according to aspects of the present disclosure;
- Figure 3A: is a block diagram which illustrates exemplary components which may be provided by a system for security threat detection and mitigation;
- Figure 3B: is a schematic diagram which illustrates digital activity reporting according to aspects of the present disclosure;
- Figure 4: is a swim-lane flow diagram which illustrates an example method for detecting and mitigating a security threat according to aspects of the present disclosure; and,
- Figure 5: illustrates an example of a computing device in which various aspects of the disclosure may be implemented.

### DETAILED DESCRIPTION WITH REFERENCE TO THE DRAWINGS

A system and method for detecting and mitigating a security threat are described herein. The security threat may relate to an action initiated from or against a source account and affecting (e.g. being in favour of, directed towards, etc.) a destination account. The action may relate to a digital transfer of some type. The security threat may relate to initiation of the action in favour of a spurious destination account which is different from a legitimate destination account. The system and method described herein detect the security threat, or a likelihood of the security threat, before initiation of the action, such that the threat can be mitigated. Mitigation may include preventing initiation of the action or suspending initiation of the action. In some examples mitigation may include suspending the action or related actions pending further intervention. In some examples, mitigation may include flagging the action or the like.

In some cases, the security threat is treated differently based on a security threat score determined for the action. The security threat score may be determined based on activity attributes, which may include digital activity attributes and/or connected activity attributes. The digital activity attributes may relate to past activity on the destination account initiated or conducted via a digital channel. The digital channel may be a mechanism by which an end-user of the destination account interacts therewith. The digital channel may extend to or include a digital channel endpoint in the form of a computing device. The digital channel endpoint may for example have a software application executing thereon which connects to a remote platform maintaining the destination account. The destination account end-user may interact with the destination account via the digital channel endpoint, and hence via the digital channel. The digital channel may include or be provided by one or more digital communication channels. The digital channel may for example include or be provided by digital communication channels including a public digital communication network, such as the Internet, mobile telephone network, or the like. Example digital communication channels include app-based or web-based communication channels; mobile network communication channels (such as SMS, USSD, and in some cases phone calls (such as Voice over Internet Protocol (VoIP) calls)) and the like. The digital channel may be a self-service channel. The connected activity attributes may relate to past activity between the destination account and one or more connected accounts.

The activity attributes can be input into a security threat scoring process which has been configured, trained, modelled or otherwise arranged to output a security threat score based on the attributes. Different predetermined thresholds may be defined, against which the security threat score can be tested to determine how to process initiation of the action.

The digital activity may for example include access to the destination account and/or activity initiated on the destination account via the digital channel; configuration of parameters relating to the destination account via the digital channel; interacting with or transacting against the destination account via the digital channel; and the like. The digital activity attributes may for example include data points relating to one or more of: digital channel access; digital channel configuration; digital channel activity; digital channel transaction/interaction; metadata relating to any such activity; and the like. Digital channel activity may include records and activities regarding the digital processes and functions that occur, such as: metadata of action requests, logs of IP addresses from which actions are initiated, logging of network traffic, retrieval of data elements from databases, authentication requests, and the like. Example data points may include: IP addresses, time stamps such as dates and time of day, entries in digital logs and/or records, application identifiers, hardware identifiers, connection duration, SIM information, page(s) viewed, and the like.

Digital channel activity may be different from transaction activity in that the former relates to the mechanisms through which the end-user interacts with their account and associated patterns (e.g. from which device, when, how often, from which geographical location, through which channel, and the like), rather than what the end-user does with their account (e.g., what actions the end-user initiates, when they initiate those actions, etc.). For example, the transaction activity may include, in one example implementation, information relating to payments made to different accounts, including payment amounts, destination accounts, date of payments and the like.

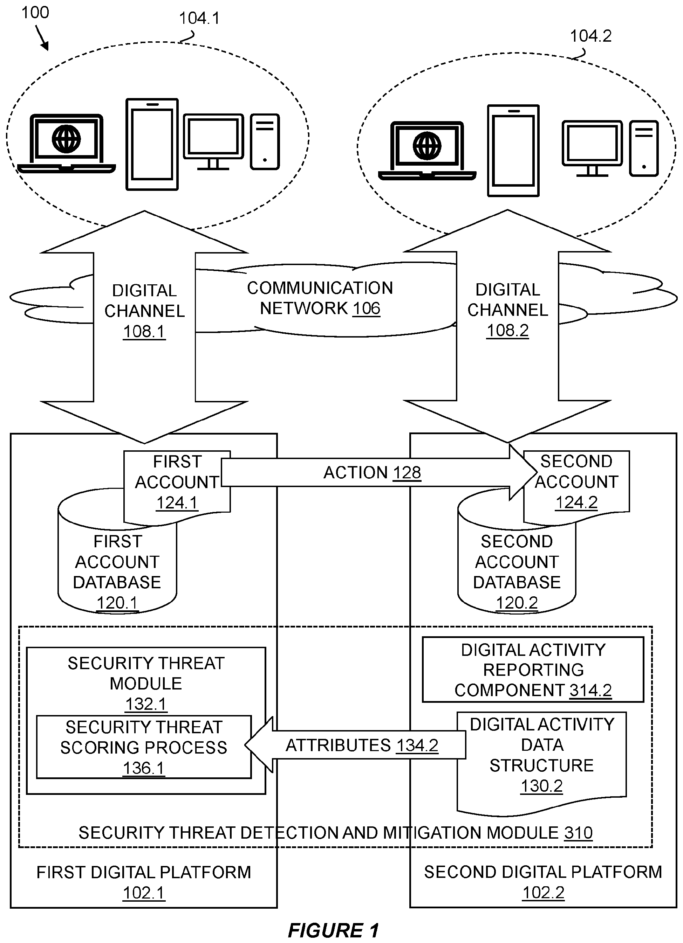

Figure 1 is a schematic diagram which illustrates an exemplary system (100) for detecting and mitigating a security threat according to aspects of the present disclosure. The system includes a first digital platform (102.1), a second digital platform (102.2) and a plurality of digital channel endpoints. Each digital platform may be maintained by a separate entity. The endpoints may be under the control of their respective end-users.

The digital platforms may be in the form of or provided by computing devices, such as server computers, distributed or clustered server computers, cloud-based server computers or the like. In some embodiments, the physical location of the digital platforms may be unknown and irrelevant to the end-users. The endpoints may be in the form of computing devices, such as mobile phones, tablet computers, laptop computers, wearable computing devices, smart appliances or the like. One or more of the endpoints may have an application executing thereon for interacting with the respective digital platform via a digital channel. In some cases, the application may have a software development kit (SDK) for collecting and reporting digital activity attributes via a digital activity reporting component, as described in greater detail below.

It should be appreciated that in a practical implementation there may be many more digital platforms, each of which may maintain many more accounts, each being associated with an end-user and accessed via that end-user's one or more endpoints. It should also be appreciated that although Figure 1 illustrates a source account being maintained by a different digital platform to a destination account, there may be scenarios in which both accounts are maintained by the same digital platform.

A first group (104.1) of digital channel endpoints communicate with the first digital platform via a communication network (106) and a first digital channel (108.1) provided by that platform. A second group (104.2) of digital channel endpoints communicate with the second digital platform via the communication network and a second digital channel (108.2) provided by that platform.

Each digital platform (102.1, 102.2) may maintain an account database (120.1, 120.2) in which an account (124.1, 124.2) may be stored. The first account (124.1) may be linked to a first end-user and the second account (124.2) may be linked to a second end-user. Each of the digital channel endpoint groups may include one or more digital channel endpoints. A digital channel endpoint may for example be in the form of an end-user device having a software application executing thereon and configured for interacting with the relevant account (such as a web browser, native application, or the like). The end-user devices may be provided by computing devices, such as mobile phones, desktops, laptops, wearable computing devices or the like.

In this manner, the end-user associated with the first account (124.1) may be able to interact therewith via the first digital channel (108.1) using a digital channel endpoint within the first group of digital channel endpoints. This may include the end-user associated with the first account (a first user) initiating an action (128) from or against the first account (124.1) towards, affecting or in favour of the second account (124.2). The action (128) may be in the form of a digital transfer, such as sending an email, providing access to a digital resource (e.g., by way of an access token), initiating a digital payment, or the like. Initiating the digital payment may include initiating one or more of: an account-based, card-based, or proxy-based (e.g., using phone number or other account proxy identifier) digital payment, or the like.

Similarly, an end-user associated with the second account (124.2) may be able to interact therewith via the second digital channel (108.2) using a digital channel endpoint within the second group of digital channel endpoints.

Each end-user and/or endpoint may authenticate itself to the digital platform maintaining the account with which it is associated via the digital channel, for example by way of one or more of: username and password, biometrics, secure endpoint identification (e.g., using keys, public key infrastructure, challenge-response-type authentication, etc.) and the like. Authentication may be required as part of accessing and/or interacting with the relevant account via the digital channel. Access to and interaction with the relevant account may be prevented without successful authentication.

At least the second digital platform (102.2) includes or has access to a digital activity reporting component (314.2) which maintains a digital activity data structure (130.2) in which data points relating to digital activity attributes are stored. The data points relating to digital activity attributes may relate to activity on the destination account initiated via the second digital channel (108.2). In some embodiments, there may be a digital activity data structure for each of the endpoints linked to or having interacted with the second account (124.2) while in other embodiments one data structure is maintained for all endpoints linked to or having interacted with the second account. The data structure may for example be in the form of or may resemble a log file, a table, a collection of fields in a database linked to the account and/or endpoint, a model (such as a large language model or other model trained using data and machine learning techniques) or the like. The data structure may record data and metadata relating to digital activity (activity initiated or conducted over the digital channel) over time. The digital activity data structure may therefore include digital activity attributes relating to past activity on the destination account initiated via the digital channel. In some embodiments, both the first and second digital platforms maintain such a data structure for digital activity on the respective accounts they maintain. In some embodiments, a digital activity reporting component for each digital platform updates a central attribute database for all accounts, end-users and/or endpoints in the system. The digital activity reporting component for each digital platform may continually update the attribute database with digital activity attributes relating to activity initiated via a digital channel such that the digital activity attributes are available for querying and evaluation upon detection of an action initiation request.

At least the first digital platform (102.1) includes a security threat module (132.1) which is configured to retrieve digital activity attributes (134.2) from the digital activity data structure (130.2) maintained by the second digital platform (102.2). The security threat module may be configured to retrieve the attributes in response to detecting or receiving notification of initiation of an action to, affecting or in favour of the second account. The retrieved attributes may relate to activity on the second account initiated via the second digital channel (108.2).

The security threat module (132.1) has access to a security threat scoring process (136.1) which is configured to receive digital activity attributes as input and to output a security threat score based on the digital activity attributes. The security threat process may be implemented by a risk engine having access to associated rules against which digital activity attributes can be evaluated. Various configurations of the security threat scoring process may be provided. In some embodiments, the process may be a model trained using training data and various learning techniques. In some embodiments, the process may be rules-based process. In one embodiment, for example, the rules-based process may be as follows:
- when digital activity of any kind is recorded for first time within 3 months, add 10 points to security threat score, otherwise exit process and output security threat score of 0; and,
- when digital activity includes configuration in the form of contact information change in last three days; add 10 points to security threat score, otherwise skip to next step; and,
- when digital activity includes configuration in the form of a limit change in last three days; add 20 points to security threat score.

Corresponding thresholds may be defined, for example a first predetermined threshold of 0 points; a second predetermined threshold of 10 points; a third predetermined threshold of between 20 and 30 points; and a fourth predetermined threshold of 40 points.

The security threat module (132.1) uses the security threat score to process initiation of the action, including, for example, permitting initiation of the action when the security threat score meets a first predetermined threshold. Depending on the configuration, meeting a predetermined threshold include one of: exceeding the predetermined threshold; being equal to the predetermined threshold; being less than or equal to the predetermined threshold; and, being greater than or equal to the predetermined threshold. In some embodiments a high security threat score represents a high likelihood of security risk while in other embodiments a low security threat score represents a high likelihood of security risk.

In some implementations, one or more of the security threat modules (132.1), the security threat scoring process (136.1), the digital activity reporting component (314.2) and the digital activity data structure (130.2) are maintained or provided by or accessible via or from a security threat detection and mitigation module (310). Some components of the security threat detection and mitigation module (310) may execute locally at the first digital platform and second digital platform, respectively, while others may execute remotely on a computing device accessible to the first digital platform and second digital platform, respectively. For example, in one embodiment, a third-party service provider provides access to the security threat detection and mitigation module (310) for the digital platforms to call and use to detect and mitigate security threats in the manner described herein.

In this manner, a security threat associated with an action initiated from a source account affecting or in favour of a destination account can be detected and mitigated.

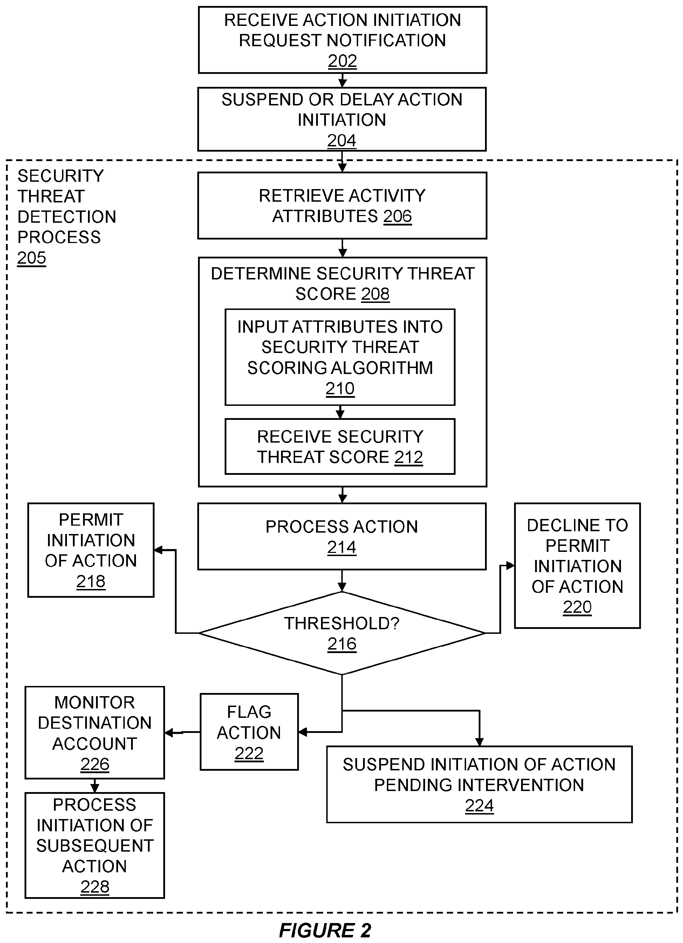

The system (100) described above may implement a method for detecting and mitigating a security. An exemplary method for detecting and mitigating a security threat is illustrated in the flow diagram of Figure 2. In the method of Figure 2, an end-user linked to the first account (being a source account) may initiate an action affecting or in favour of the second account (being a destination account).

The method may include receiving (202) an action initiation request notification relating to a request to initiate the action from the source account. The action initiation request notification may include information identifying the destination account. The action initiation request notification may relate to a request to initiate the action received from an endpoint, for example including a source application linked to the source account.

The method may include suspending or delaying (204) initiation of the action while a security threat detection process is initiated.

The method may include, before permitting initiation of the action, using the destination account identifying information to retrieve (206) activity attributes associated with the destination account. The activity attributes may include digital activity attributes relating to activity on the destination account initiated via a digital channel. Retrieving the attributes may include retrieving attributes associated with one or more digital channel endpoints linked to the destination account. This may include identifying one or more digital channel endpoints, or one or more digital activity data structures associated with the one or more digital channel endpoints, linked to the destination account and retrieving digital activity attributes stored in association with each of the one or more endpoints. Retrieving the digital activity attributes may include retrieving the attributes linked to or associated with the destination account and/or an endpoint linked to the destination account from a digital activity data structure (130.2).

In some examples, the activity attributes include connected activity attributes relating to past activity between the destination account and one or more connected accounts. The one or more connected accounts may for example include third party accounts which have in the past acted as either sources or destinations relative to destination account. In other words, the connected accounts may be accounts from which actions have been initiated in favour of or affecting the destination account or accounts in favour of which actions are initiated from the destination account (being the destination account for the purpose of the present action). The connected accounts may therefore be previous sources to or destinations from the destination account. Connected activity attributes may include patterns in activity between the destination account and the one or more connected accounts, frequency of actions, characteristics of such actions, digital activity attributes relating to the actions, and the like. In this manner, what might otherwise be considered anomalous behaviour regarding the destination account may be determined during security threat scoring to be normal behaviour, or vice versa.

The method may include determining (208) a security threat score associated with the action. This may include: inputting (210) the retrieved activity attributes into a security threat scoring process (136.1) which outputs the security threat score based on the activity attributes; and, receiving (212) the security threat score output from or by the security threat scoring process.

The method may include processing (214) the action based on the security threat score. This may include comparing (216) the security threat score to or against one or more predetermined thresholds. Processing (214) the action may include any one or more of: permitting (218) initiation of the action when the security threat score meets a first predetermined threshold; flagging (222) the action when the security threat score meets a second predetermined threshold; suspending (224) initiation of the action pending further intervention when the security threat score meets a third predetermined threshold; reaching out and informing the initiator of the action of the threat actions and asking them to choose whether to continue or not (e.g. including transmitting a prompt to the endpoint from which the action is initiated which requires positive confirmation from the end-user to continue with initiation of the action); and, declining (220) to permit initiation of the action when the security threat score meets a fourth predetermined threshold. In some cases, more than one process may be performed for one or more of the one or more predefined thresholds. For example, different embodiments may provide for between one to four discrete predetermined thresholds. Different embodiments may be arranged to take one or more steps in response to each of the different one or more predetermined thresholds being met.

For example, in one embodiment, when the security threat score meets a first predetermined threshold, initiation of the action may be permitted. When the security threat score meets a second predetermined threshold, the initiation of the action may be permitted and the action may be flagged. When the security threat score meets a third predetermined threshold, initiation of the action may be suspended pending further intervention. When the security threat score meets a fourth predetermined threshold, initiation of the action may be declined to be permitted.

For example, in another embodiment, there may be only two predetermined thresholds. When the security threat score meets a first predetermined threshold, initiation of the action may be permitted. When the security threat score meets a fourth predetermined threshold, initiation of the action may be declined to be permitted.

For example, in another embodiment, there may be only three predetermined thresholds. When the security threat score meets a first predetermined threshold, initiation of the action may be permitted. When the security threat score meets a second predetermined threshold, the initiation of the action may be permitted and the action may be flagged. When the security threat score meets a third predetermined threshold, initiation of the action may be suspended pending further intervention.

In some embodiments, when initiation of the action is permitted and when the action is flagged, the method includes monitoring (226) the destination account and processing (228) a subsequent action initiated from the destination account. This may include evaluating characteristics of the subsequent action and either permitting or declining to permit the subsequent action based on the evaluation. Declining to permit initiation of the subsequent action may include reversing the action initiated from the source account affecting or in favour of the destination account.

In some embodiments, the security threat detection system and method described herein may be implemented and provided by a third-party service provider providing security threat detection and mitigation services to entities maintaining digital platforms, such as the first and second digital platforms. The third-party service provider may for example be a security service provider. The service provider may provide a security threat detection and mitigation module for integration into a digital platform, such as the first and second digital platforms described above.

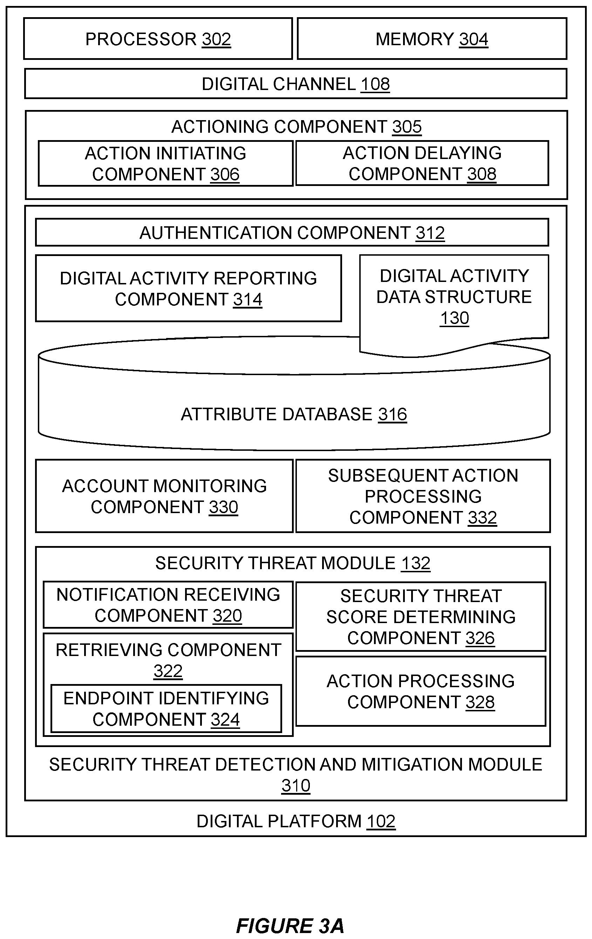

Various components may be provided for implementing the system and method described above. Figure 3A is a block diagram which illustrates exemplary components which may be provided by a system for security threat detection and mitigation. The system includes a digital platform (102). Either or both of the first digital platform (102.1) and second digital platform (102.2) described above may have the configuration of the digital platform (102) described below.

The digital platform (102) may include a processor (302) for executing the functions of components described below, which may be provided by hardware or by software units executing on the digital platform (102). The software units may be stored in a memory component (304) and instructions may be provided to the processor (302) to carry out the functionality of the described components. In some cases, for example in a cloud computing implementation, software units arranged to manage and/or process data on behalf of the digital platform (102) may be provided remotely.

The digital platform includes or provides the digital channel (108) and an actioning component (305). The actioning component includes an action initiating component (306) and an action suspending or delaying component (308). The action initiating component may be arranged to initiate an action against a source account maintained by the digital platform affecting or in favour of a destination account maintained by the digital platform or another digital platform. The action initiating component may be arranged to initiate the action in response to receiving an action initiation request from an endpoint via the digital channel and subject to the security threat module permitting initiation of the action.

The action suspending or delaying component (308) may be arranged to suspend or delay initiation of the action pending a determination by the security threat module or other input. The action suspending or delaying component may be arranged to detect requested initiation of the action and transmit an action initiation request notification to the security threat module (132) for the security threat module to process.

The digital platform may host, execute or have access to a security threat detection and mitigation module (310). In some embodiments, the security threat detection and mitigation module (310) is provided by a third-party service provider. Some of the components may execute locally at the digital platform while others may execute remotely at a computing device of the third-party service provider from where they are accessible by the digital platform.

The security threat detection and mitigation module (310) may include the security threat module (132) described above with reference to Figure 1. The security threat detection and mitigation module (310) may include an authentication component (312) which is arranged to authenticate end-users and/or endpoints connecting to the digital platform via the digital channel (108). The security threat detection and mitigation module (310) may include a digital activity reporting component (314) arranged to record and/or report digital activity attributes in a digital activity data structure (130). The digital activity data structure may be stored in an attribute database (316) accessible to the digital activity reporting component (314) and to the security threat module and/or security threat modules of other digital platforms. The attribute database (316) may store digital activity attributes associated with a number of different accounts and/or endpoints. The digital activity attribute database may store digital activity attributes for a plurality of digital platforms.

The security threat module (132) may include a notification receiving component (320) arranged to receive an action initiation request notification relating to a request to initiate an action from a source account and including information identifying a destination account. The notification may be received from the action delaying component (308).

The security threat module (132) may include a retrieving component (322) arranged to use the destination account identifying information to retrieve digital activity attributes relating to digital activity on the destination account. The retrieving component (322) is configured to retrieve data points from a digital activity data structure associated with the destination account. This may entail retrieving the digital activity attributes from a digital activity data structure maintained by a security threat detection and mitigation component of a digital platform providing the destination account (e.g., in the example of Figure 1, being the second digital platform). The retrieving component (322) may include an endpoint identifying component (324) configured to identify one or more digital channel endpoints linked to the destination account. The retrieving component may retrieve attributes associated with the one or more endpoints, for example by retrieving attributes from digital activity data structures maintained for each endpoint via which the end-user of the destination account interacts with the destination account.

The retrieving component (322) may retrieve the digital activity attributes before the action initiating component initiates the action and may do so in response to the action delaying component detecting and delaying initiation off the action.

The security threat module (132) may include a security threat score determining component (326) arranged to determine a security threat score by inputting the retrieved digital activity attributes into a security threat scoring process which outputs a security threat score based on the digital activity attributes.

The security threat module (132) may include an action processing component (328) arranged to process the action based on the security threat score. The action processing component may for example be arranged to compare the security threat score to one or more thresholds. Processing initiation of the action may include one or more of: permitting initiation of the action when the security threat score meets a first predetermined threshold; flagging the action when the security threat score meets a second predetermined threshold; suspending initiation of the action pending further intervention when the security threat score meets a third predetermined threshold; reaching out and informing the initiator of the action of the threat actions and asking them to choose whether to continue or not; and, declining to permit initiation of the action when the security threat score meets a fourth predetermined threshold. Permitting initiation of the action may include notifying the action initiating component and/or the action delaying component. Flagging the action may include transmitting a flag notification to a digital platform maintaining the destination account. The flag notification may include the destination account identifying information and may be configured to cause the digital platform to monitor the destination account.

The security threat detection and mitigation module (310) may include an account monitoring component (330) arranged to monitor the account and a subsequent action processing component (332) configured to process a subsequent action initiated from the account when acting as a destination account. The account monitoring component (330) may be configured to monitor the account when acting as a destination account in response to an action processing component flagging an action affecting or in favour of the destination account. The account monitoring component may be configured to receive a flag notification from a digital platform maintaining a source account against which an action is initiated against the destination account. The flag notification may include the destination account identifying information. The account monitoring component (330) may monitor various attributes relating to actions initiated from the account and may input them into an action risk scoring process configured to output a risk score associated with the action and/or activity on the account. The subsequent action processing component (332) may be configured to decline to initiate the subsequent action when risk score meets a predefined risk score threshold. Declining to permit initiation of the subsequent action may include reversing the action initiated from the source account affecting or in favour of the destination account. Reversing the action may include initiating an action from the account affecting or in favour of another account having been the source account.

In some examples, the account monitoring component (330) maintains a connected account profile based on account activity. The account monitoring component (330) may for example be configured to store connected activity attributes relating to activity between the account and one or more connected accounts. The one or more connected accounts include third party accounts being sources to or destinations from the account being monitored. The connected activity attributes may include patterns in activity between the account and the one or more connected accounts, such as frequency of actions, characteristics of actions and digital activity attributes relating to the actions.

Some components of the security threat detection and mitigation module (310) may be provided exclusively for the digital platform. For example, the authentication component may be provided exclusively for the digital platform to authenticate its end users. Other digital platforms may have their own exclusive instance of an authentication component for authenticating their own end-users.

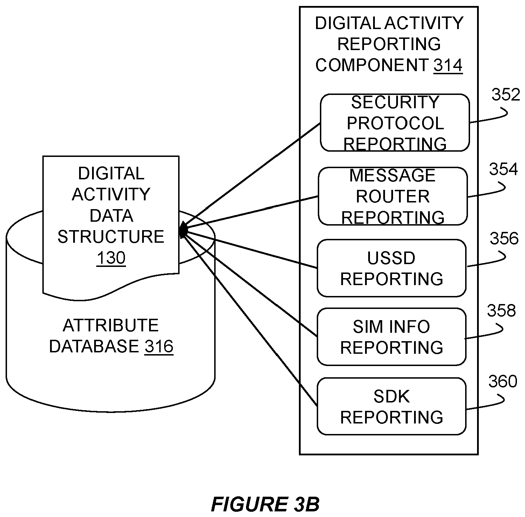

Figure 3B is a schematic diagram which illustrates digital activity reporting according to aspects of the present disclosure. A digital activity reporting component (314) may implement one or more of: security protocol reporting (352); message router reporting (354); USSD reporting (356); SIM information reporting (358); and SDK reporting (360). Security protocol reporting may for example include reporting digital activity and associated metadata relating security protocol authentication by an end-user (e.g., so-called three domain secure ("3DS") type authentication). Message router reporting may for example include reporting digital activity and associated metadata relating to authentication and other digital messages exchanged between an endpoint and the digital platform and/or an authentication component via the digital channel. This may for example include collecting information relating to each socket connection between the digital platform (or an authentication component thereof) and an end-user endpoint. USSD reporting may include reporting digital activity attributes and associated metadata relating to USSD channel utilisation by an endpoint and/or associated end-user. SIM information reporting may include reporting digital activity attributes and associated metadata relating to a SIM card executing within an endpoint (such as SIM swap check, etc.). SDK reporting may include reporting digital activity and associated metadata relating to an endpoint. The endpoint may for example include an SDK configured to report on various digital activity attributes, including for example user authentication, authentication type, time of authentication, frequency of authentication, type of interaction, type of configuration or the like. The reporting described above may be enabled via components of an authentication service provided by a third-party security and/or authentication service provider. Reporting may include storing data points relating to the reported digital activity in a digital activity data structure (130) maintained in an attribute database (316). Reporting may be conducted on a continual (ongoing) basis and each data point may be timestamped for monitoring changes in behaviour in activity initiated via a digital channel.

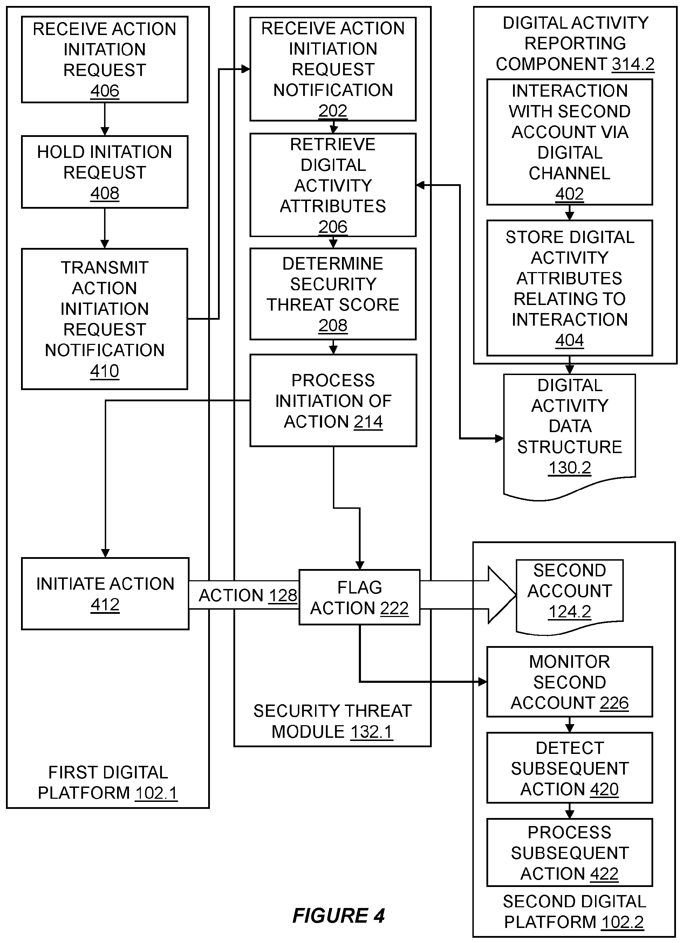

Figure 4 is a swim-lane flow diagram which illustrates an example method for detecting and mitigating a security threat, in which respective swim lanes delineate steps performed by respective digital platforms (or components or modules thereof), such as the first digital platform (102.1) and second digital platform (102.2) described above. The swim-lane flow diagram of Figure 4 illustrates additional context relating to the method described above with reference to Figure 2.

An end-user linked to the second account (124.2) may interact (402) therewith via an endpoint within the second group of endpoints (104.2) and the digital channel (108.2). Such interaction may be referred to as activity initiated via the digital channel. Such interaction or activity may include: logging in to the second digital platform and/or second account (including authenticating the end-user and/or endpoint via an authentication component); accessing the second account and/or information relating to the second account via the digital channel; the end-user configuring parameters and/or controls associated with the second account via the digital channel; the end-user initiating actions against the second account via the digital channel; and the like. In an example embodiment in which the accounts are financial accounts, example interactions might include: logging in to the digital platform; changing contact information; limit increases or decreases; adding or removing beneficiaries; initiating transfers; balance checks; and the like. In an example embodiment in which the accounts are email accounts, example interactions might include: logging in to the digital platform; changing contact information (such as email recovery address, phone number, etc.); sending an email; reading an email; and the like.

A digital activity reporting component (314.2) of or accessible to the second digital platform (102.2) may record or store (404) digital activity attributes relating to the activity on the second account initiated via the digital platform. The attributes may be stored in a digital activity data structure (130.2), including for example data points relating to one or more of: access via the digital channel; configuration via the digital channel; interaction via the digital channel; metadata (such as timestamps, device identifiers, software application identifiers, address information (such as IP address, MAC address, etc.), type of authentication (e.g. biometric, password, PIN, etc.), and the like) relating to any such digital activity; and the like.

The interacting and storing steps may repeat overtime for each interaction via the digital channel. In this manner, the digital activity data structure (103.2) storing information relating to historic digital activity associated with the second account is built up over time. This allows for changes or patterns in the digital activity to be monitored and detected by a trained and/or configured security threat scoring process. For example, patterns typical of digital interaction with mule accounts may be detectable using the attributes and the threat scoring process.

At some point, an end-user associated with a first account (124.1) maintained by a first digital platform (102.1) may initiate an action from or against the first account, being a source account, affecting or in favour of the second account, being a destination account.

It may be that the end-user initiates the action in response to being coerced, duped, forced or otherwise made to initiate the action in favour of an account to which the end-user would not normally or knowingly initiate actions. The end-user may for example be tricked into initiating the action in favour of the second account, being under control of a fraudster, when thinking that he or she is initiating the action in favour of a different, legitimate account (such as of a business with which the end-user is interacting). For example, the fraudster may convince the end-user that the legitimate entity, in favour of which the end user intends initiating the action, has changed their account details, and that the end-user must use updated account details (which in reality point to an account under the control of the fraudster). Thus, in these circumstances, initiating the action in favour of the second account would be a security breach and would expose the end-user linked to the first account to a security compromise. Initiation of the action may be a security breach or threat regardless of the end-user's state of mind or beliefs. For example, if the destination account is compromised, a security breach will occur whether or not the end-user knows it.

Of course, in other circumstances, the end-user may initiate the action against the first account in favour of another, legitimate account, in which case no security breach or compromise takes place.

Either way, the first digital platform (102.1) receives (406) an action initiation request relating to initiation of an action against the first account (124.1) in favour of the second account (124.2), which may or may not be associated with a security risk. The action initiation request includes information identifying the destination account, such as an account identifier or the like. The request may be received from an endpoint within the first group of endpoints (104.1), such as a software application executing on a computing device and linked to the first account. The request may be received responsive to the end-user authenticating him/herself and/or the endpoint to the digital platform via an authenticating component.

In response to receiving the request, the first digital platform holds or suspends (408) initiation of the action and transmits (410) an action initiation request notification, including the information identifying the destination account, to a security threat module (132.1) of the first digital platform.

The security threat module (132.1) receives (202) the action initiation request; retrieves (206) digital activity attributes from the digital activity data structure (130.2) associated with the second account being the destination account; determines (208) a security threat score using a security threat scoring process; and, processes (214) initiation of the action based on the security threat score.

In an example scenario in which processing initiation of the action includes permitting (218) initiation of the action and flagging (222) the action, responsive to notification from the security threat module, the first digital platform (102.1) initiates (412) the action (128) in favour of the destination account (being the second account). The security threat module (132.1) may flag (222) the action at the second digital platform (102.2) maintaining the second account in favour of which the action is initiated. Flagging the action may include transmitting a flag notification to the second digital platform (102.2) maintaining the destination account. The flag notification may include the destination account identifying information and may be configured to cause the digital platform to monitor the destination account and/or the action directed towards the second, destination account.

The second digital platform may receive the flag notification. In response to the flagging, the second digital platform may monitor (226) the destination account (being the second account). This may include evaluating characteristics of any actions initiated against the second account against one or more risk scoring processes. The second digital platform may at some stage detect (420) initiation of a subsequent action initiated against the second account in favour of another account. Detection of the subsequent action may be in response to characteristics associated therewith meeting a predefined risk threshold. The digital platform may process (422) initiation of the subsequent action initiated from the destination account. Processing initiation of the subsequent action may include either permitting or declining to permit initiation of the subsequent action based on the evaluation. Declining to permit initiation of the subsequent action may include reversing the action initiated from the source account (being the first account) in favour of the destination account (being the second account).

The system and method described herein thus enable security threat detection and mitigation relating to an action initiated from or against a source account in favour of a destination account. The security threat may be detected and mitigated before initiation of the action.

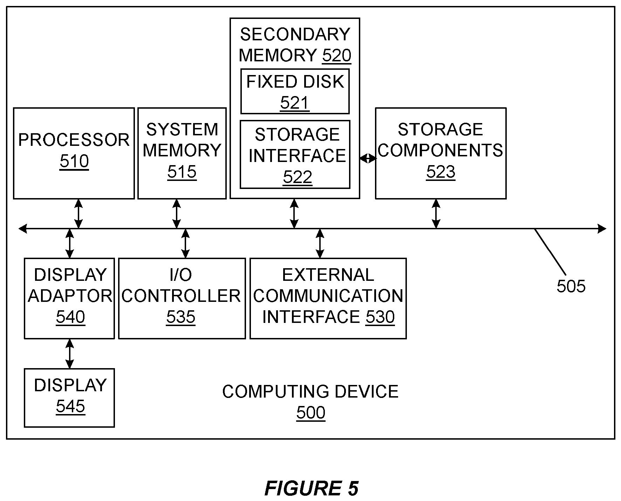

Figure 5 illustrates an example of a computing device (500) in which various aspects of the disclosure may be implemented. The computing device (500) may be embodied as any form of data processing device including a personal computing device (e.g. laptop or desktop computer), a server computer (which may be self-contained, physically distributed over a number of locations), a client computer, or a communication device, such as a mobile phone (e.g. cellular telephone), satellite phone, tablet computer, personal digital assistant or the like. Different embodiments of the computing device may dictate the inclusion or exclusion of various components or subsystems described below.

The computing device (500) may be suitable for storing and executing computer program code. The various participants and elements in the previously described system diagrams may use any suitable number of subsystems or components of the computing device (500) to facilitate the functions described herein. The computing device (500) may include subsystems or components interconnected via a communication infrastructure (505) (for example, a communications bus, a network, etc.). The computing device (500) may include one or more processors (510) and at least one memory component in the form of computer-readable media. The one or more processors (510) may include one or more of: CPUs, graphical processing units (GPUs), microprocessors, field programmable gate arrays (FPGAs), application specific integrated circuits (ASICs) and the like. In some configurations, a number of processors may be provided and may be arranged to carry out calculations simultaneously. In some implementations various subsystems or components of the computing device (500) may be distributed over a number of physical locations (e.g. in a distributed, cluster or cloud-based computing configuration) and appropriate software units may be arranged to manage and/or process data on behalf of remote devices.

The memory components may include system memory (515), which may include read only memory (ROM) and random access memory (RAM). A basic input/output system (BIOS) may be stored in ROM. System software may be stored in the system memory (515) including operating system software. The memory components may also include secondary memory (520). The secondary memory (520) may include a fixed disk (521), such as a hard disk drive, and, optionally, one or more storage interfaces (522) for interfacing with storage components (523), such as removable storage components (e.g. magnetic tape, optical disk, flash memory drive, external hard drive, removable memory chip, etc.), network attached storage components (e.g. NAS drives), remote storage components (e.g. cloud-based storage) or the like.

The computing device (500) may include an external communications interface (530) for operation of the computing device (500) in a networked environment enabling transfer of data between multiple computing devices (500) and/or the Internet. Data transferred via the external communications interface (530) may be in the form of signals, which may be electronic, electromagnetic, optical, radio, or other types of signal. The external communications interface (530) may enable communication of data between the computing device (500) and other computing devices including servers and external storage facilities. Web services may be accessible by and/or from the computing device (500) via the communications interface (530).

The external communications interface (530) may be configured for connection to wireless communication channels (e.g., a cellular telephone network, wireless local area network (e.g. using Wi-Fi^{™}), satellite-phone network, Satellite Internet Network, etc.) and may include an associated wireless transfer element, such as an antenna and associated circuitry. The external communications interface (530) may include a subscriber identity module (SIM) in the form of an integrated circuit that stores an international mobile subscriber identity and the related key used to identify and authenticate a subscriber using the computing device (500). One or more subscriber identity modules may be removable from or embedded in the computing device (500).

The computer-readable media in the form of the various memory components may provide storage of computer-executable instructions, data structures, program modules, software units and other data. A computer program product may be provided by a computer-readable medium having stored computer-readable program code executable by the central processor (510). A computer program product may be provided by a non-transient or non-transitory computer-readable medium, or may be provided via a signal or other transient or transitory means via the communications interface (530).

Interconnection via the communication infrastructure (505) allows the one or more processors (510) to communicate with each subsystem or component and to control the execution of instructions from the memory components, as well as the exchange of information between subsystems or components. Peripherals (such as printers, scanners, cameras, or the like) and input/output (I/O) devices (such as a mouse, touchpad, keyboard, microphone, touch-sensitive display, input buttons, speakers and the like) may couple to or be integrally formed with the computing device (500) either directly or via an I/O controller (535). One or more displays (545) (which may be touch-sensitive displays) may be coupled to or integrally formed with the computing device (500) via a display or video adapter (540).

The foregoing description has been presented for the purpose of illustration; it is not intended to be exhaustive or to limit the technology to the precise forms disclosed. Persons skilled in the relevant art can appreciate that many modifications and variations are possible in light of the above disclosure.

Any of the steps, operations, components or processes described herein may be performed or implemented with one or more hardware or software units, alone or in combination with other devices. Components or devices configured or arranged to perform described functions or operations may be so arranged or configured through computer-implemented instructions which implement or carry out the described functions, algorithms, or methods. The computer-implemented instructions may be provided by hardware or software units. In one embodiment, a software unit is implemented with a computer program product comprising a non-transient or non-transitory computer-readable medium containing computer program code, which can be executed by a processor for performing any or all of the steps, operations, or processes described. Software units or functions described in this application may be implemented as computer program code using any suitable computer language such as, for example, Java^{™}, C++, or Perl^{™} using, for example, conventional or object-oriented techniques. The computer program code may be stored as a series of instructions, or commands on a non-transitory computer-readable medium, such as a random access memory (RAM), a read-only memory (ROM), a magnetic medium such as a hard-drive, or an optical medium such as a CD-ROM. Any such computer-readable medium may also reside on or within a single computational apparatus, and may be present on or within different computational apparatuses within a system or network.

Flowchart illustrations and block diagrams of methods, systems, and computer program products according to embodiments are used herein. Each block of the flowchart illustrations and/or block diagrams, and combinations of blocks in the flowchart illustrations and/or block diagrams, may provide functions which may be implemented by computer readable program instructions. In some alternative implementations, the functions identified by the blocks may take place in a different order to that shown in the flowchart illustrations.

Some portions of this description describe the embodiments of the technology in terms of algorithms and symbolic representations of operations on information. These algorithmic descriptions and representations, such as accompanying flow diagrams, are commonly used by those skilled in the data processing arts to convey the substance of their work effectively to others skilled in the art. These operations, while described functionally, computationally, or logically, are understood to be implemented by computer programs or equivalent electrical circuits, microcode, or the like. The described operations may be embodied in software, firmware, hardware, or any combinations thereof.

The language used in the specification has been principally selected for readability and instructional purposes, and it may not have been selected to delineate or circumscribe the inventive subject matter. It is therefore intended that the scope of the present disclosure be limited not by this detailed description, but rather by any claims that issue on an application based hereon. Accordingly, the present disclosure of the embodiments of the invention is intended to be illustrative, but not limiting, of the scope of any accompanying claims.

Finally, throughout the specification and any accompanying claims, unless the context requires otherwise, the word 'comprise' or variations such as 'comprises' or 'comprising' will be understood to imply the inclusion of a stated integer or group of integers but not the exclusion of any other integer or group of integers.

## Claims

1. A computer-implemented method for detecting and mitigating a security threat relating to an action to be initiated against a source account (124.1) affecting a destination account (124.2), comprising:
receiving (202) an action initiation request notification relating to a request to initiate the action (128) from the source account (124.1) and including information identifying the destination account (124.2);
before permitting initiation of the action, using the destination account identifying information to retrieve (206) activity attributes including digital activity attributes (134.2) relating to past activity on the destination account (124.2) initiated via a digital channel (108), the digital activity attributes including data points relating to access to the destination account (124.2) and/or activity initiated on the destination account via the digital channel (108);
determining (208) a security threat score by inputting the retrieved activity attributes into a security threat scoring process (136.1) which outputs a security threat score based on the activity attributes; and,
processing (214) the action based on the security threat score, including, when initiation of the action is permitted and when the action is flagged, monitoring (226) the destination account and processing (228) a subsequent action initiated from the destination account (124.2) when a risk score associated with destination account activity meets a predefined risk score threshold, wherein monitoring (226) the destination account includes evaluating characteristics of destination account activity and/or the subsequent action, wherein processing (228) the subsequent action includes either permitting or declining to permit initiation of the subsequent action based on the evaluation, and wherein declining to permit initiation of the subsequent action includes reversing the action initiated from the source account (124.1) affecting the destination account (124.2).

2. The method as claimed in claim 1, wherein processing (214) the action includes permitting (218) initiation of the action and flagging (222) the action when the security threat score meets the second predetermined threshold.

3. The method as claimed in claim 2, wherein flagging (222) the action includes transmitting a flag notification to a digital platform (102) maintaining the destination account (124.2), the flag notification including the destination account identifying information and being configured to cause the digital platform to monitor the destination account (124.2).

4. The method as claimed in any preceding claim, wherein retrieving (206) attributes includes identifying a digital channel endpoint linked to the destination account (124.2) and retrieving (206) attributes associated with the endpoint.

5. The method as claimed in claim 4, wherein the digital channel endpoint includes a software application executing on an end-user device, wherein the software application is one of: a web browser; or, a native application configured for interacting with the destination account via the digital channel.

6. The method as claimed in any of the preceding claims, wherein the action initiation request notification relates to a request to initiate the action from a source application linked to the source account (124.1).

7. The method as claimed in any of the preceding claims, wherein the digital activity attributes (134.2) include data points relating to one or more of: configuration via the digital channel; interaction via the digital channel; and metadata relating to activity initiated via the digital channel.

8. A system for detecting and mitigating a security threat relating to an action to be initiated against a source account affecting a destination account, the system including a memory for storing computer-readable program code and a processor for executing the computer-readable program code, and comprising:
a notification receiving component (320) for receiving an action initiation request notification relating to a request to initiate the action from the source account and including information identifying the destination account;
a retrieving component (322) for, before permitting initiation of the action, using the destination account identifying information to retrieve activity attributes including digital activity attributes (134.2) relating to past activity on the destination account (124.2) initiated via a digital channel (108), the digital activity attributes including data points relating to access to the destination account (124.2) and/or activity initiated on the destination account via the digital channel (108);
a security threat score determining component (326) for determining a security threat score by inputting the retrieved activity attributes into a security threat scoring process (136.1) which outputs a security threat score based on the activity attributes; and,
an action processing component (328) for processing the action based on the security threat score, including, when initiation of the action is permitted and when the action is flagged, monitoring (226) the destination account and processing (228) a subsequent action initiated from the destination account (124.2) when a risk score associated with destination account activity meets a predefined risk score threshold, wherein monitoring (226) the destination account includes evaluating characteristics of destination account (124.2) activity and/or the subsequent action, wherein processing (228) the subsequent action includes either permitting or declining to permit initiation of the subsequent action based on the evaluation, and wherein declining to permit initiation of the subsequent action includes reversing the action initiated from the source account (124.1) affecting the destination account (124.2).

9. The system of claim 8, wherein the action processing component (328) is configured to carry out one or more of:
permit initiation of the action when the security threat score meets a first predetermined threshold;
flag the action when the security threat score meets a second predetermined threshold;
suspend initiation of the action pending further intervention when the security threat score meets a third predetermined threshold;
reach out and informs the initiator of the action of the threat actions and asks them to choose whether to continue or not; and,
decline to permit initiation of the action when the security threat score meets a fourth predetermined threshold.

10. The system of claim 8 or 9, wherein the retrieving component (322) includes an endpoint identifying component (324) configured to identify a digital channel endpoint linked to the destination account.

11. The system of claim 10, wherein the retrieving component (322) retrieves attributes associated with the endpoint.

12. The system as claimed in claim 11, wherein the digital channel endpoint includes a software application executing on an end-user device, and wherein the software application is one of: a web browser; or, a native application configured for interacting with the destination account.

13. The system as claimed in any of claims 8 to 11, including a digital activity reporting component (314) executing on a computing device maintained by an entity maintaining the destination account.

14. The system of claim 13, wherein the digital activity reporting component (314) is configured to maintain a digital activity data structure (130) which stores the digital activity attributes relating to activity on the destination account initiated via the digital channel, and wherein the retrieving component (322) is configured to retrieve data points associated with the destination account from the digital activity data structure (130).

15. A computer program product for detecting and mitigating a security threat relating to an action to be initiated against a source account affecting a destination account, the computer program product comprising a computer-readable medium having stored computer-readable program code for performing the steps of:
receiving an action initiation request notification relating to a request to initiate the action from the source account and including information identifying the destination account;
before permitting initiation of the action, using the destination account identifying information to retrieve activity attributes including digital activity attributes relating to past activity on the destination account initiated via a digital channel, the digital activity attributes including data points relating to access to the destination account and/or activity initiated on the destination account via the digital channel;
determining a security threat score by inputting the retrieved activity attributes into a security threat scoring process which outputs a security threat score based on the activity attributes; and,
processing the action based on the security threat score, including, when initiation of the action is permitted and when the action is flagged, monitoring the destination account and processing a subsequent action initiated from the destination account when a risk score associated with destination account activity meets a predefined risk score threshold, wherein monitoring the destination account includes evaluating characteristics of destination account activity and/or the subsequent action, wherein processing the subsequent action includes either permitting or declining to permit initiation of the subsequent action based on the evaluation, and wherein declining to permit initiation of the subsequent action includes reversing the action initiated from the source account affecting the destination account.

## Patentansprüche

1. Computerimplementiertes Verfahren zum Detektieren und Abschwächen einer Sicherheitsbedrohung in Bezug auf eine Handlung, die gegen ein Quellkonto (124.1), welches ein Zielkonto (124.2) beeinträchtigt, zu initiieren ist, umfassend:
Empfangen (202) einer Handlungsinitiierungsanfragenachricht in Bezug auf eine Anfrage zum Initiieren der Handlung (128) von dem Quellkonto (124.1) und welche Informationen, die das Zielkonto (124.2) identifizieren, umfasst;
vor dem Zulassen des Initiierens der Handlung Verwenden der das Zielkonto identifizierenden Informationen, um Aktivitätsattribute abzurufen (206), die digitale Aktivitätsattribute (134.2) in Bezug auf eine durch einen Digitalkanal (108) initiierte vergangene Aktivität auf dem Zielkonto (124.2) umfassen, wobei die digitalen Aktivitätsattribute Datenpunkte in Bezug auf einen Zugriff auf das Zielkonto (124.2) und/oder eine über den Digitalkanal (108) auf dem Zielkonto initiierte Aktivität umfassen;
Bestimmen (208) eines Sicherheitsbedrohungswerts durch Eingeben der abgerufenen Aktivitätsattribute in einen Sicherheitsbedrohungsbewertungsprozess (136.1), welcher einen Sicherheitsbedrohungswert basierend auf den Aktivitätsattributen ausgibt; und
Verarbeiten (214) der Handlung basierend auf dem Sicherheitsbedrohungswert, umfassend, wenn ein Initiieren der Handlung zugelassen wird und wenn die Handlung markiert wird, das Überwachen (226) des Zielkontos und Verarbeiten (228) einer darauffolgenden von dem Zielkonto (124.2) initiierten Handlung, wenn ein der Zielkontoaktivität zugeordneter Risikowert einen vordefinierten Risikowertschwellenwert erreicht, wobei das Überwachen (226) des Zielkontos das Bewerten von Eigenschaften der Zielkontoaktivität und/oder der darauffolgenden Handlung umfasst, wobei das Verarbeiten (228) der darauffolgenden Handlung entweder das Erlauben oder das Ablehnen des Zulassens des Initiierens der darauffolgenden Handlung basierend auf der Bewertung umfasst und wobei das Ablehnen des Zulassens des Initiierens der darauffolgenden Handlung das Umkehren der Handlung, die von dem Quellkonto (124.1), welches das Zielkonto (124.2) beeinträchtigt, initiiert ist, umfasst.

2. Verfahren nach Anspruch 1, wobei das Verarbeiten (214) der Handlung das Erlauben (218) des Initiierens der Handlung und das Markieren (222) der Handlung, wenn der Sicherheitsbedrohungswert den zweiten vorbestimmten Schwellenwert erreicht, umfasst.

3. Verfahren nach Anspruch 2, wobei das Markieren (222) der Handlung das Übertragen einer Markierungsnachricht an eine digitale Plattform (102), welche das Zielkonto (124.2) aufrechterhält, umfasst, wobei die Markierungsnachricht die das Zielkonto identifizierenden Informationen umfasst und dazu ausgelegt ist, zu bewirken, dass die digitale Plattform das Zielkonto (124.2) überwacht.

4. Verfahren nach einem der vorangegangenen Ansprüche, wobei das Abrufen (206) von Attributen das Identifizieren eines Digitalkanalendpunkts, der mit dem Zielkonto (124.2) verknüpft ist, und das Abrufen (206) von dem Endpunkt zugeordneten Attributen umfasst.

5. Verfahren nach Anspruch 4, wobei der Digitalkanalendpunkt eine auf einem Endbenutzergerät ausgeführten Software-Anwendung umfasst, wobei die Software-Anwendung eine aus einem Webbrowser oder einer nativen Anwendung, die zur Interaktion mit dem Zielkonto über den Digitalkanal konfiguriert ist, ist.

6. Verfahren nach einem der vorangegangenen Ansprüche, wobei die Handlungsinitiierungsanfragenachricht eine Anfrage zum Initiieren der Handlung von einer Quellanwendung, die mit dem Quellkonto (124.1) verknüpft ist, betrifft.

7. Verfahren nach einem der vorangegangenen Ansprüche, wobei die digitalen Aktivitätsattribute (134.2) Datenpunkte in Bezug auf eines oder mehrere aus folgenden umfassen: Konfiguration über den Digitalkanal; Interaktion über den Digitalkanal; und Metadaten in Bezug auf über den Digitalkanal initiierte Aktivität.

8. System zum Detektieren und Abschwächen einer Sicherheitsbedrohung in Bezug auf eine Handlung, die gegen ein Quellkonto, welches ein Zielkonto beeinträchtigt, zu initiieren ist, wobei das System einen Speicher zum Speichern von computerlesbarem Programmcode und einen Prozessor zum Ausführen des computerlesbaren Programmcodes umfasst, und umfassend:
eine Nachrichtenempfangskomponente (320) zum Empfangen einer Handlungsinitiierungsanfragenachricht in Bezug auf eine Anfrage zum Initiieren der Handlung von dem Quellkonto und welche Informationen, die das Zielkonto identifizieren, umfasst;
eine Abrufkomponente (322) zum Verwenden der das Zielkonto identifizierenden Informationen vor dem Zulassen des Initiierens der Handlung, um Aktivitätsattribute abzurufen, die digitale Aktivitätsattribute (134.2) in Bezug auf eine durch einen Digitalkanal (108) initiierte vergangene Aktivität auf dem Zielkonto (124.2) umfassen, wobei die digitalen Aktivitätsattribute Datenpunkte in Bezug auf einen Zugriff auf das Zielkonto (124.2) und/oder eine über den Digitalkanal (108) auf dem Zielkonto initiierte Aktivität umfassen;
eine Sicherheitsbedrohungswertbestimmungskomponente (326) zum Bestimmen eines Sicherheitsbedrohungswerts durch Eingeben der abgerufenen Aktivitätsattribute in einen Sicherheitsbedrohungsbewertungsprozess (136.1), welcher einen Sicherheitsbedrohungswert basierend auf den Aktivitätsattributen ausgibt; und
eine Handlungsverarbeitungskomponente (328) zum Verarbeiten der Handlung basierend auf dem Sicherheitsbedrohungswert, umfassend, wenn ein Initiieren der Handlung zugelassen wird und wenn die Handlung markiert wird, das Überwachen (226) des Zielkontos und Verarbeiten (228) einer darauffolgenden von dem Zielkonto (124.2) initiierten Handlung, wenn ein der Zielkontoaktivität zugeordneter Risikowert eine vordefinierte Risikowertschwelle erreicht, wobei das Überwachen (226) des Zielkontos das Bewerten von Eigenschaften der Aktivität des Zielkontos (124.2) und/oder der darauffolgenden Handlung umfasst, wobei das Verarbeiten (228) der darauffolgenden Handlung entweder das Erlauben oder das Ablehnen des Zulassens des Initiierens der darauffolgenden Handlung basierend auf der Bewertung umfasst und wobei das Ablehnen des Zulassens des Initiierens der darauffolgenden Handlung das Umkehren der Handlung, die von dem Quellkonto (124.1), welches das Zielkonto (124.2) beeinträchtigt, initiiert ist, umfasst.

9. System nach Anspruch 8, wobei die Handlungsverarbeitungskomponente (328) konfiguriert ist, um eines oder mehrere aus folgenden auszuführen:
Erlauben des Initiierens der Handlung, wenn der Sicherheitsbedrohungswert eine erste vorbestimmte Schwelle erreicht;
Markieren der Handlung, wenn der Sicherheitsbedrohungswert eine zweite vorbestimmte Schwelle erreicht;
Unterbrechen des Initiierens der Handlung bis zu weiterer Intervention, wenn der Sicherheitsbedrohungswert eine dritte vorbestimmte Schwelle erreicht;
Kontaktieren und Informieren des Initiators der Handlung über die Bedrohungshandlungen und Auffordern desselben, auszuwählen, ob er fortfahren möchte oder nicht; und
Ablehnen des Erlaubens des Initiierens der Handlung, wenn der Sicherheitsbedrohungswert eine vierte vorbestimmte Schwelle erreicht.

10. System nach Anspruch 8 oder 9, wobei die Abrufkomponente (322) eine Endpunktidentifikationskomponente (324) umfasst, die konfiguriert ist, um einen Digitalkanalendpunkt, welcher mit dem Zielkonto verknüpft ist, zu identifizieren.

11. System nach Anspruch 10, wobei die Abrufkomponente (322) dem Endpunkt zugeordnete Attribute abruft.

12. System nach Anspruch 11, wobei der Digitalkanalendpunkt eine auf einem Endbenutzergerät ausgeführten Software-Anwendung umfasst, wobei die Software-Anwendung eine aus einem Webbrowser oder einer nativen Anwendung, die zur Interaktion mit dem Zielkonto über den Digitalkanal konfiguriert ist, ist.

13. System nach einem der Ansprüche 8 bis 11, umfassend eine Digitale-Aktivität-Benachrichtigungskomponente (314), die auf einer Computervorrichtung ausgeführt wird, welche durch eine das Zielkonto betreuende Instanz betreut wird.

14. System nach Anspruch 13, wobei die Digitale-Aktivität-Benachrichtigungskomponente (314) konfiguriert ist, um eine Digitale-Aktivität-Datenstruktur (130) zu betreuen, welche die digitalen Aktivitätsattribute in Bezug auf die durch den Digitalkanal initiierte Aktivität auf dem Zielkonto speichert und wobei die Abrufkomponente (322) konfiguriert ist, um dem Zielkonto zugeordnete Datenpunkte von der Digitale-Aktivität-Datenstruktur (130) abzurufen.

15. Computerprogrammprodukt zum Detektieren und Abschwächen einer Sicherheitsbedrohung in Bezug auf eine Handlung, die gegen ein Quellkonto, welches ein Zielkonto beeinträchtigt, zu initiieren ist, wobei das Computerprogrammprodukt ein computerlesbares Medium umfasst, auf dem computerlesbarer Programmcode zum Durchführen folgender Schritte gespeichert ist:
Empfangen einer Handlungsinitiierungsanfragenachricht in Bezug auf eine Anfrage zum Initiieren der Handlung von dem Quellkonto und welche Informationen, die das Zielkonto identifizieren, umfasst;
vor dem Zulassen des Initiierens der Handlung Verwenden der das Zielkonto identifizierenden Informationen, um Aktivitätsattribute abzurufen, die digitale Aktivitätsattribute in Bezug auf eine durch einen Digitalkanal initiierte vergangene Aktivität auf dem Zielkonto umfassen, wobei die digitalen Aktivitätsattribute Datenpunkte in Bezug auf einen Zugriff auf das Zielkonto und/oder eine über den Digitalkanal auf dem Zielkonto initiierte Aktivität umfassen;
Bestimmen eines Sicherheitsbedrohungswerts durch Eingeben der abgerufenen Aktivitätsattribute in einen Sicherheitsbedrohungsbewertungsprozess, welcher einen Sicherheitsbedrohungswert basierend auf den Aktivitätsattributen ausgibt; und
Verarbeiten der Handlung basierend auf dem Sicherheitsbedrohungswert, umfassend, wenn ein Initiieren der Handlung zugelassen wird und wenn die Handlung markiert wird, das Überwachen des Zielkontos und Verarbeiten einer darauffolgenden von dem Zielkonto initiierten Handlung, wenn ein der Zielkontoaktivität zugeordneter Risikowert eine vordefinierte Risikowertschwelle erreicht, wobei das Überwachen des Zielkontos das Bewerten von Eigenschaften der Zielkontoaktivität und/oder der darauffolgenden Handlung umfasst, wobei das Verarbeiten der darauffolgenden Handlung entweder das Erlauben oder das Ablehnen des Zulassens des Initiierens der darauffolgenden Handlung basierend auf der Bewertung umfasst und wobei das Ablehnen des Zulassens des Initiierens der darauffolgenden Handlung das Umkehren der Handlung, die von dem Quellkonto, welches das Zielkonto beeinträchtigt, initiiert ist, umfasst.

## Revendications

1. Procédé mis en œuvre par ordinateur pour détecter et atténuer une menace de sécurité relative à une action à initier à l'encontre d'un compte source (124.1) affectant un compte de destination (124.2), comprenant les étapes consistant à :
recevoir (202) une notification de demande d'initiation d'action relative à une demande d'initiation de l'action (128) à partir du compte source (124.1) et comprenant des informations identifiant le compte de destination (124.2) ;
avant de permettre l'initiation de l'action, utiliser les informations d'identification de compte de destination pour récupérer (206) des attributs d'activité incluant des attributs d'activité numérique (134.2) relatifs à une activité passée sur le compte de destination (124.2) initiée via un canal numérique (108), les attributs d'activité numérique incluant des points de données relatifs à un accès au compte de destination (124.2) et/ou à une activité initiée sur le compte de destination via le canal numérique (108) ;
déterminer (208) une note de menace de sécurité par entrée des attributs d'activité récupérés dans un processus de notation de menace de sécurité (136.1) qui délivre en sortie une note de menace de sécurité sur la base des attributs d'activité ; et
traiter (214) l'action sur la base de la note de menace de sécurité, y compris, lorsque l'initiation de l'action est autorisée et lorsque l'action est signalée, surveiller (226) le compte de destination et traiter (228) une action ultérieure initiée à partir du compte de destination (124.2) lorsqu'une note de risque associée à l'activité du compte de destination atteint un seuil de note de risque prédéfini, dans lequel la surveillance (226) du compte de destination inclut une évaluation de caractéristiques de l'activité du compte de destination et/ou de l'action ultérieure, dans lequel le traitement (228) de l'action ultérieure inclut une autorisation ou un refus de permettre l'initiation de l'action ultérieure sur la base de l'évaluation, et dans lequel le refus de permettre l'initiation de l'action ultérieure inclut une annulation de l'action initiée à partir du compte source (124.1) affectant le compte de destination (124.2).

2. Procédé selon la revendication 1, dans lequel le traitement (214) de l'action inclut une autorisation (218) de l'initiation de l'action et un signalement (222) de l'action lorsque la note de menace de sécurité atteint le deuxième seuil prédéterminé.

3. Procédé selon la revendication 2, dans lequel le signalement (222) de l'action inclut une transmission d'une notification de signalement à une plate-forme numérique (102) conservant le compte de destination (124.2), la notification de signalement incluant les informations d'identification de compte de destination et étant configurée pour amener la plate-forme numérique à surveiller le compte de destination (124.2).

4. Procédé selon l'une quelconque des revendications précédentes, dans lequel l'extraction (206) d'attributs inclut une identification d'un point d'extrémité de canal numérique lié au compte de destination (124.2) et une récupération (206) d'attributs associés au point d'extrémité.

5. Procédé selon la revendication 4, dans lequel le point d'extrémité de canal numérique inclut une application logicielle s'exécutant sur un dispositif d'utilisateur final, dans lequel l'application logicielle est un certain parmi :
un navigateur Web ;
ou, une application native configurée pour interagir avec le compte de destination via le canal numérique.

6. Procédé selon l'une quelconque des revendications précédentes, dans lequel la notification de demande d'initiation d'action concerne une demande d'initiation d'action à partir d'une application source liée au compte source (124.1).

7. Procédé selon l'une quelconque des revendications précédentes, dans lequel les attributs d'activité numérique (134.2) incluent des points de données relatifs à une ou plusieurs parmi :
une configuration via le canal numérique ;
une interaction via le canal numérique ; et
les métadonnées relatives à l'activité initiée via le canal numérique.

8. Système pour détecter et atténuer une menace de sécurité relative à une action devant être initiée à l'encontre d'un compte source affectant un compte de destination, le système incluant une mémoire pour stocker un code de programme lisible par ordinateur et un processeur pour exécuter le code de programme lisible par ordinateur, et comprenant :
un composant de réception de notification (320) pour recevoir une notification de demande d'initiation d'action relative à une demande d'initiation de l'action à partir du compte source et incluant des informations identifiant le compte de destination ;
un composant de récupération (322) pour, avant de permettre l'initiation de l'action, utiliser les informations d'identification de compte de destination pour récupérer des attributs d'activité incluant des attributs d'activité numérique (134.2) relatifs à une activité passée sur le compte de destination (124.2) initiée via un canal numérique (108), les attributs d'activité numérique incluant des points de données relatifs à un accès au compte de destination (124.2) et/ou à une activité initiée sur le compte de destination via le canal numérique (108) ;
un composant de détermination de note de menace de sécurité (326) pour déterminer une note de menace de sécurité par entrée des attributs d'activité récupérés dans un processus de notation de menace de sécurité (136.1) qui délivre en sortie une note de menace de sécurité sur la base des attributs d'activité ; et
un composant de traitement d'action (328) pour traiter l'action sur la base de la note de menace de sécurité, y compris, lorsque l'initiation de l'action est autorisée et lorsque l'action est signalée, surveiller (226) le compte de destination et traiter (228) une action ultérieure initiée à partir du compte de destination (124.2) lorsqu'une note de risque associée à l'activité du compte de destination atteint un seuil de note de risque prédéfini, dans lequel la surveillance (226) du compte de destination inclut une évaluation de caractéristiques de l'activité du compte de destination (124.2) et/ou de l'action ultérieure, dans lequel le traitement (228) de l'action ultérieure inclut une autorisation ou un refus de permettre l'initiation de l'action ultérieure sur la base de l'évaluation, et dans lequel le refus de permettre l'initiation de l'action ultérieure inclut une annulation de l'action initiée à partir du compte source (124.1) affectant le compte de destination (124.2).

9. Système selon la revendication 8, dans lequel le composant de traitement d'action (328) est configuré pour effectuer une ou plusieurs des étapes consistant à :
permettre l'initiation de l'action lorsque la note de menace de sécurité atteint un premier seuil prédéterminé ;
signaler l'action lorsque la note de menace de sécurité atteint un deuxième seuil prédéterminé ;
suspendre l'initiation de l'action en attendant une intervention supplémentaire lorsque la note de menace pour la sécurité atteint un troisième seuil prédéterminé ;
entrer en contact avec et informer l'initiateur de l'action des actions de menace et lui demander de choisir de continuer ou non ; et,
refuser de permettre l'initiation de l'action lorsque la note de menace de sécurité atteint un quatrième seuil prédéterminé.

10. Système selon la revendication 8 ou 9, dans lequel le composant de récupération (322) inclut un composant d'identification de point d'extrémité (324) configuré pour identifier un point d'extrémité de canal numérique lié au compte de destination.

11. Système selon la revendication 10, dans lequel le composant de récupération (322) récupère des attributs associés au point d'extrémité.

12. Système selon la revendication 11, dans lequel le point d'extrémité de canal numérique inclut une application logicielle s'exécutant sur un dispositif d'utilisateur final, et dans lequel l'application logicielle est un certain parmi :
un navigateur Web ; ou
une application native configurée pour interagir avec le compte de destination.

13. Système selon l'une quelconque des revendications 8 à 11, incluant un composant de rapport d'activité numérique (314) s'exécutant sur un dispositif informatique conservé par une entité conservant le compte de destination.

14. Système selon la revendication 13, dans lequel le composant de rapport d'activité numérique (314) est configuré pour conserver une structure de données d'activité numérique (130) qui stocke les attributs d'activité numérique relatifs à une activité sur le compte de destination initiée via le canal numérique, et dans lequel le composant de récupération (322) est configuré pour récupérer des points de données associés au compte de destination à partir de la structure de données d'activité numérique (130).

15. Produit de programme informatique pour détecter et atténuer une menace de sécurité relative à une action devant être initiée à l'encontre d'un compte source affectant un compte de destination, le produit de programme informatique comprenant un support lisible par ordinateur présentant un code de programme lisible par ordinateur stocké pour effectuer les étapes consistant à :
recevoir une notification de demande d'initiation d'action relative à une demande d'initiation de l'action à partir du compte source et incluant des informations identifiant le compte de destination ;
avant de permettre l'initiation de l'action, utiliser les informations d'identification de compte de destination pour récupérer des attributs d'activité incluant des attributs d'activité numérique relatifs à une activité passée sur le compte de destination initiée via un canal numérique, les attributs d'activité numérique incluant des points de données relatifs à un accès au compte de destination et/ou à une activité initiée sur le compte de destination via le canal numérique ;
déterminer une note de menace de sécurité par entrée des attributs d'activité récupérés dans un processus de notation de menace de sécurité qui délivre en sortie une note de menace de sécurité sur la base des attributs d'activité ; et
traiter l'action sur la base de la note de menace de sécurité, y compris, lorsque l'initiation de l'action est autorisée et lorsque l'action est signalée, surveiller le compte de destination et traiter une action ultérieure initiée à partir du compte de destination lorsqu'une note de risque associée à l'activité du compte de destination atteint un seuil de note de risque prédéfini, dans lequel la surveillance du compte de destination inclut une évaluation de caractéristiques de l'activité du compte de destination et/ou de l'action ultérieure, dans lequel le traitement de l'action ultérieure inclut une autorisation ou un refus de permettre l'initiation de l'action ultérieure sur la base de l'évaluation, et dans lequel le refus de permettre l'initiation de l'action ultérieure inclut une annulation de l'action initiée à partir du compte source affectant le compte de destination.
